# EUROPEAN PATENT SPECIFICATION

(11) **EP 1 483 088 B1**
(45) Date of publication and mention of the grant of the patent: **29.04.2009**
(21) Application number: 03703617.5
(22) Date of filing: 10.02.2003
(51) Int. Cl.: B25H 3/04, A47G 29/087, A47J 45/02

(54) **A DEVICE FOR SUSPENSION OF OBJECTS TO A WALL**
VORRICHTUNG ZUM AUFHÄNGEN VON OBJEKTEN AN EINER WAND
DISPOSITIF SERVANT A SUSPENDRE DES OBJETS A UN MUR

(30) Priority: 14.02.2002 SE 0200456
(43) Date of publication of application: 08.12.2004
(73) Proprietor: ANDERSSON, Börje, 238 38 Oxie (SE)
(72) Inventor: ANDERSSON, Börje, 238 38 Oxie (SE)
(86) International application number: PCT/SE2003/000202
(87) International publication number: WO 2003/068460

(56) References cited:
- WO-A1-95/22010
- GB-A- 2 224 305
- US-A- 4 863 135

## Description

The present invention relates to a device for easy and rapid suspension of objects - e.g. tools - to a wall.

### Technical Field

It is often desired to store objects by hanging them to a wall. However, it is a problem that the objects to be stored often are of different size and shape. It could be desired to store a watering can, a rake, a wrench, a bicycle, a garden hose and a roof load carrier for an automobile by hanging them to a wall without any pre-selected place. Therefore, it is desired to provide a wall in a garage or a workshop with suspension devices, which could be used regardless of the size and shape of the object to be stored for the moment. It is also desired to be able to store the object safely and quickly.

### Background Art

Several attempts have been made to provide suspension devices which will meet this goal. As an example reference may be made to WO 95/22 010 describing a device for suspension of e.g. tools to a wall. Said device comprises a base plate adapted to be permanently secured to a wall and being provided with a flange extending outwardly from the base plate, the said base plate also being permanently connected to one end of a string adapted to be wrapped around the object to be suspended and to be removably fastened to an outwardly bent part of the base plate. If it is desired to use the suspending device for storing a new and larger object it is possible to increase the length of the string by passing ends of the string - which has a uniform thickness - through pairs of holes in a second outwardly bent part of the base plate.

The device according to WO 95/22 010 has several drawbacks: The length of the wrap-around part of the string must be adjusted each time a new object having a different shape or size should be stored. The locking of the string wrapped around the object is established by friction between the string and the two pairs of holes. The holes should have sharp edges or the string should be made of a soft material in order to obtain the necessary friction. Therefore, care should be taken to secure a fastening which e.g. can stand vibrations.

### Object of the Invention

The present invention has for its object to provide a suspension device, which without any adjustments may be used for suspension of any object, without being particular careful, and without any adjustments of the length of the string.

### Summary of the Invention

According to the present invention a device for easy and rapid suspension of objects to a wall, comprising a base plate adapted to be permanently secured to said wall and being provided with a flange extending outwardly from the base plate, said base plate also being permanently connected to one end of a string adapted to be wrapped around the object to be suspended and to be removably fastened to the base plate, is **characterised in that** the string is provided with enlargements longitudinally spaced from each other along said string, and that the flange of the base plate has an open, downwards extending slot widening towards its open end, the most narrow width of the slot being smaller than the size of the enlargements.

### Contents of the Drawings

The invention will be described below reference being made to the drawings in which
Figure 1 is a front view of a device according to the invention,
Figure 2 a side view of the device of figure 1 in the direction of the arrows in figure 1,
Figure 3 and 4 a front view resp. a side view of another device according to the invention,
Figure 5 a device according to the invention used for storing a hammer on a wall, and
Figure 6 the same device used for storing a watering can.

### Detailed Description of the Drawings

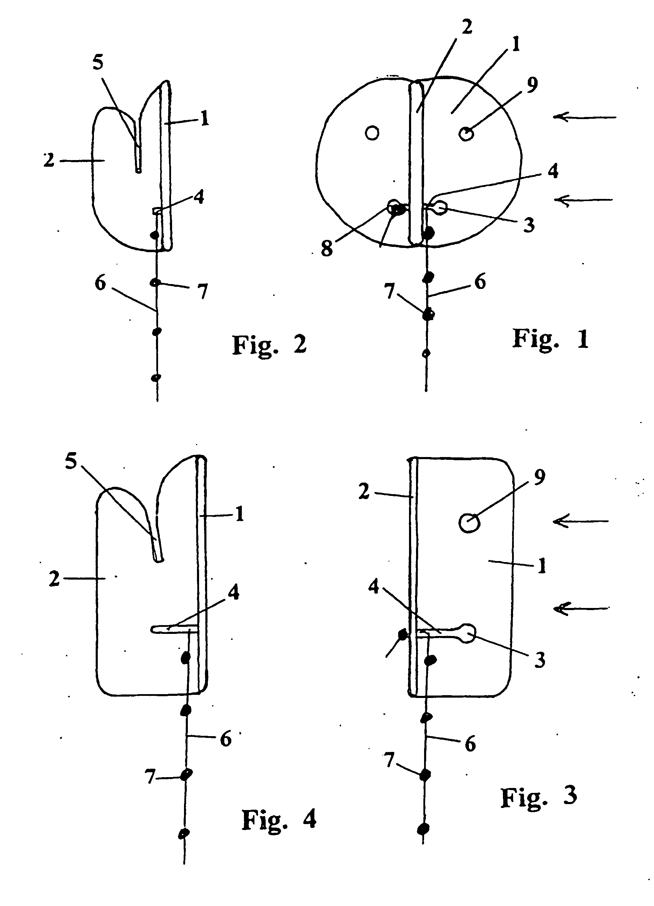

As will appear from figures 1 and 2 the device shown consists of a base plate 1 having a flange 2 directed perpendicular from the base plate 1. Said base plate 1 is provided with a hole 3 and a first slot 4 extending from the hole 3 and directed towards the flange 2. The slot 4 has a smaller width than the diameter of the hole 3. The slot extends completely through the flange 2.

The flange 2 is provided with a second slot 5 extending from one end of the flange 2 in the direction towards the other end of the flange 2.

One end of a string 6 provided with enlargements 7 in the form of spheres or pearls having such shape and dimensions that they can pass through the hole 3 but not the slots 4 and 5, has been passed via the hole 3 into the said first slot 4 and further out through a similar hole 8 at the other side of the flange 2. The hole 3 may even be used for passing a fastening screw (not shown) through the base plate 1 into a wall. A further fastening hole in the base plate 1 has been designated by 9.

The figures 3 and 4 show a simpler embodiment of a device according to the invention. The base plate 1 and the flange 2 have been established as an angled rail. The references in figures 1 and 2 are used for corresponding features in the figures 3 and 4.

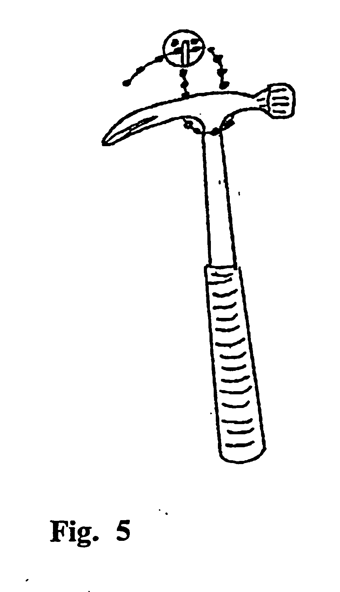

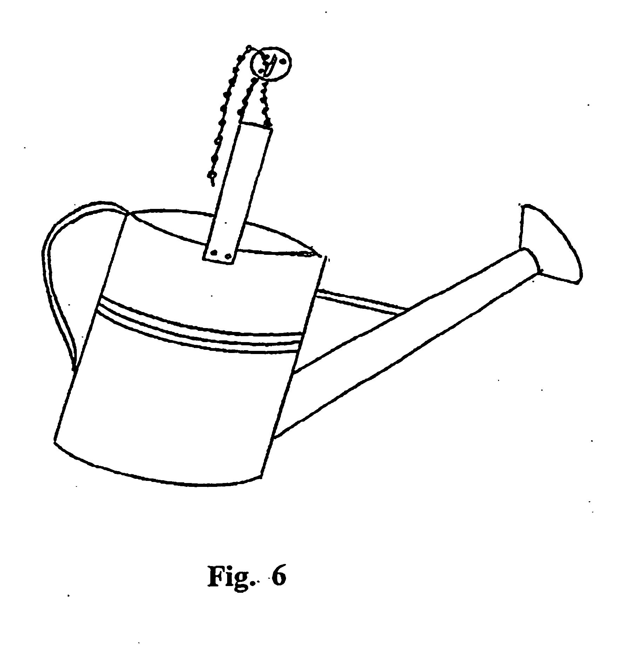

The devices shown in figures 1 and 2 resp. in figures 3 and 4 are used as shown in figures 5 and 6.

The lower, free end of the string 6 shown in figure 1 and 2 - resp. in figure 3 and 4 - is wrapped around a suitable part of the object to be stored by suspending it to a wall. Subsequently the string 6 is passed into the slot 5 for providing the shortest possible sling. In case of larger objects - the watering can of figure 6 - the sling should be larger than the sling of figure 5 in which the object, a hammer, will be fastened better with a smaller sling - perhaps with a double sling.

The string should be long enough - e.g. one meter - to make it possible to store larger objects.

## Claims

1. A device for easy and rapid suspension of objects to a wall, said device comprising a base plate (1) adapted to be permanently secured to said wall and being provided with a flange (2) extending outwardly from the base plate (1), said base plate (1) also being permanently connected to one end of a string (6) adapted to be wrapped around the object to be suspended and to be removably fastened to the base plate (1),
**characterised in that** the string (6) is provided with enlargements (7) longitudinally spaced from each other along said string, and that the flange (2) of the base plate (1) has an open, downwards extending slot (5) widening towards its open end, the most narrow width of the slot (5) being smaller than the size of the enlargements (7).

2. A device according to claim 1,
**characterised in that** the base plate (1) adapted to be fastened to a wall is provided with an opening (3, 4) through which the end of the string (6) adapted to be permanently fastened may be thread and subsequently locked by securing the base plate (1) to the wall.

## Patentansprüche

1. Vorrichtung zum leichten und schnellen Aufhängen von Objekten an einer Wand, wobei die Vorrichtung eine Grundplatte (1) umfasst, die zur dauerhaften Anbringung an der Wand angepasst und mit einem Flansch (2) versehen ist, der von der Grundplatte (1) nach außen führt, wobei die Grundplatte (1) auch dauerhaft mit einem Ende einer Schnur (6) verbunden ist, die zum Umschlingen des aufzuhängenden und an der Grundplatte (1) abnehmbar zu befestigenden Objekts angepasst ist,
**dadurch gekennzeichnet, dass**
die Schnur (6) mit Erweiterungen (7) versehen ist, die in Längsrichtung voneinander entlang der Schnur beabstandet sind, und dass der Flansch (2) der Grundplatte (1) einen offenen, abwärts führenden Schlitz (5) besitzt, der sich in Richtung seines offenen Endes aufweitet, wobei die schmalste Breite des Schlitzes (5) kleiner als die Größe der Erweiterungen (7) ist.

2. Vorrichtung nach Anspruch 1,
**dadurch gekennzeichnet, dass**
die Grundplatte (1), die zur Befestigung an einer Wand angepasst ist, mit einer Öffnung (3, 4) versehen ist, durch die das zur dauerhaften Befestigung angepasste Ende der Schnur (6) geführt und anschließend durch Anbringen der Grundplatte (1) an der Wand festgeklemmt werden kann.

## Revendications

1. Dispositif pour la suspension facile et rapide d'objets contre un mur, ledit dispositif comprenant une embase (1) prévue pour être fixée à demeure contre ledit mur et présentant une lame (2) qui s'étend vers l'extérieur à partir de l'embase (1), ladite embase (1) étant également raccordée à demeure à l'extrémité d'un cordon (6) prévu pour être enroulé autour de l'objet à suspendre et pour être fixé de manière amovible à l'embase (1), **caractérisé en ce que** le cordon (6) présente des élargissements (7) espacés les uns des autres de manière longitudinale, et **en ce que** la lame (2) de l'embase (1) présente une fente (5) s'étendant vers le bas et s'élargissant en direction de son ouverture, la largeur la plus étroite de la fente (5) étant inférieure à la taille des élargissements (7).

2. Dispositif selon la revendication 1, **caractérisé en ce que** l'embase (1) prévue pour être fixée au mur présente une ouverture (3, 4) à travers laquelle l'extrémité du cordon (6) prévue pour être fixée à demeure peut être enfilée et ensuite verrouillée en fixant l'embase (1) au mur. ,
